# EUROPÄISCHE PATENTSCHRIFT

(11) **EP 2 238 370 B1**
(45) Veröffentlichungstag und Bekanntmachung des Hinweises auf die Patenterteilung: **22.05.2013**
(21) Anmeldenummer: 08866393.5
(22) Anmeldetag: 25.10.2008
(51) Int. Cl.: F16C 35/063, F16H 57/023

(54) **GETRIEBE**
TRANSMISSION
BOÎTE DE VITESSES

(30) Priorität: 21.12.2007 DE 102007062148
(43) Veröffentlichungstag der Anmeldung: 13.10.2010
(73) Patentinhaber: Dr. Ing. h.c. F. Porsche AG, 70435 Stuttgart (DE); ZF Friedrichshafen AG, 88038 Friedrichshafen (DE)
(72) Erfinder: NIKO, Michael, 71701 Schwieberdingen (DE); RETTENMAIER, Markus, 70195 Stuttgart (DE)
(86) Internationale Anmeldenummer: PCT/EP2008/009047
(87) Internationale Veröffentlichungsnummer: WO 2009/083054

(56) Entgegenhaltungen:
- EP-A- 0 848 190
- WO-A-89/01101
- DE-A1- 3 546 454
- DE-A1- 10 343 995

## Beschreibung

Die vorliegende Erfindung betrifft ein Getriebe mit zumindest einer Eingangswelle, einer Ausgangswelle sowie einer parallel zu diesen beiden Wellen angeordneten dritten Welle gemäß dem Oberbegriff des Anspruchs 1 Ein entsprechendes getriebe ist aus Dokuments EP 0 848 190 A2 bekannt Erfindung betrifft außerdem ein mit einem derartigen Getriebe ausgestattetes Kraftfahrzeug.

Aus der DE 199 56 734 A1 ist ein Getriebe bekannt, welches sechs Gänge sowie einen Rückwärtsgang aufweist. Um eine axiale Länge des Getriebes im Vergleich zu einem Fünfganggetriebe nicht nennenswert größer gestalten zu müssen, sind fünf Zahnräder auf der Eingangswelle angeordnet, von denen zwei drehfest mit dieser verbunden und die übrigen drehbar auf der Welle gelagert sind. Auf der Ausgangswelle sind insgesamt sieben Zahnräder angeordnet, von welchen fünf drehfest mit der Ausgangswelle verbunden sind, während die übrigen zwei Zahnräder drehbar auf der Ausgangswelle gelagert sind. Schließlich sind auf der dritten Welle zumindest zwei Zahnräder angeordnet, von denen eines drehfest und das andere drehbar auf der Welle gelagert ist. Das Getriebe ist dabei u. a. dadurch gekennzeichnet, dass das auf der Ausgangswelle drehbar gelagerte Zahnrad für den zweiten Gang zum Antreiben der dritten Welle genutzt werden kann, sofern der zweite Gang nicht eingelegt ist.

Aus der DE 103 32 210 A1 ist ein weiteres Getriebe, insbesondere ein Doppelkupplungsgetriebe bekannt, wobei eine Eingangswelle mit einer koaxial dazu angeordneten Ausgangswelle vorgesehen ist. Die Lagerung der beiden Wellen erfolgt dabei in x-Anordnung.

Schließlich ist aus der DE 102 53 416 A1 ein Stufengetriebe für ein Kraftfahrzeug mit einer Eingangswelle, einer als Hohlwelle ausgebildeten Vorgelegewelle und einer ersten Ausgangswelle des Verteilergetriebes bekannt. Die Ausgangswelle verläuft dabei durch die Hohlwelle hindurch, wobei die Hohlwelle an einem ersten Ende, welches benachbart zu dem Verteilergetriebe ist, und an einem zweiten Ende gelagert ist.

Die vorliegende Erfindung beschäftigt sich mit dem Problem, für ein gattungsgemäßes Getriebe eine verbesserte Ausführungsform anzugeben, welche sich insbesondere durch einen erhöhten Wirkungsgrad auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Getriebe ein Lager einer Ausgangswelle axial in Richtung eines Ritzels der Ausgangswelle über eine Zwischenmutter mit einem niedrigen Drehmoment zu verspannen und dadurch das Lager frei von hohen Verspannungskräften zu halten, welche über eine Klemmmutter und ein zwischen der Klemmmutter und der Zwischenmutter angeordnetes Zahnrad auf die Zwischenmutter einwirken. Das Getriebe weist dabei bekannterweise eine Eingangswelle sowie eine Ausgangswelle und eine parallel zu diesen beiden Wellen angeordnete dritte Welle auf. Die Ausgangswelle trägt dabei stirnendseitig das oben beschriebene Ritzel sowie das Zahnrad, welches mit der dritten Welle wirkungsverbunden ist. Gelagert wird die Ausgangswelle über das zwischen dem Ritzel und dem Zahnrad vorgesehene Lager, zwischen welchem und dem Zahnrad oben besagte Zwischenmutter vorgesehen ist, welche das Lager gegen das Ritzel verspannt. Der axiale Aufbau an der Ausgangswelle stellt sich dabei wie folgt dar: Stirnendseitig ist das Ritzel vorgesehen, welchem in axialer Richtung das Lager der Ausgangswelle folgt, das von der sich axial anschließenden Zwischenmutter gegen das Ritzel verspannt ist. Axial anschließend an die Zwischenmutter ist das Zahnrad zur Kraftübertragung an die dritte Welle angeordnet, welches von der sich wiederum hieran axial anschließenden Klemmmutter gegen die Zwischenmutter verspannt ist. Durch das Einfügen der Zwischenmutter zwischen dem Zahnrad und dem Lager der Ausgangswelle kann das von der Klemmmutter aufgebrachte hohe Drehmoment nicht direkt auf das Lager einwirken, sondern wird von der dazwischen angeordneten Zwischenmutter aufgenommen, so dass das Lager lediglich mit dem deutlich kleineren Drehmoment der Zwischenmutter gegen das Ritzel verspannt wird, wodurch eine besonders leichtgängige Lagerung der Ausgangswelle und damit ein hoher Wirkungsgrad des Getriebes erzielt werden können. Der hohe Wirkungsgrad resultiert dabei insbesondere in der Reduzierung der Reibung am Lager.

Bei einer vorteilhaften Weiterbildung der erfindungsgemäßen Lösung ist das Lager als Kegelrollenlager ausgebildet. Das Kegelrollenlager, welches gemäß einer weiteren vorteilhaften Ausführungsform zweireihig ausgebildet ist, besitzt zwei axial versetzt zueinander gelagerte Kegelrollenanordnungen, welche entgegengesetzt zueinander und zur Ausgangswelle geneigt sind. Die getriebegehäuseseitige Lagerschale des Kegelrollenlagers ist dabei über zumindest eine Befestigungsschraube fixiert, während der restliche Teil des Kegelrollenlagers, welcher drehfest mit der Ausgangswelle verbunden ist, von der Zwischenmutter gegen eine Radialstufe des stirnendseitig angeordneten Ritzels verspannt ist.

Gemäß einer weiteren vorteilhaften Ausführungsform der erfindungsgemäßen Lösung ist die Ausgangswelle an ihrem, dem Ritzel abgewandten Ende über ein Wälzlager an einem Gehäuse des Getriebes gelagert. Hierbei sind ein auf der Ausgangswelle vorgesehener Innenring sowie ein zugehöriger Außenring über zwischen diesen beiden Ringen rollend gelagerte Wälzkörper gelagert. Da die Wälzkörper vorzugsweise sowohl im Innenring als auch im Außenring auf gehärteten Stahlflächen mit optimierter Schmierung abrollen, ist die Rollreibung eines derartigen Wälzlagers äußerst gering. Auch hierdurch kann der Wirkungsgrad des erfindungsgemäßen Getriebes weiter erhöht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen Längsschnitt durch ein erfindungsgemäßes Getriebe,
- Fig. 2: einen Längsschnitt durch eine erfindungsgemäße Ausgangswelle,
- Fig. 3: eine Seitenansicht auf eine erfindungsgemäße Ausgangswelle mit einer sichtbaren Zwischenmutter,
- Fig. 4: eine Darstellung wie in Fig. 3, jedoch bei einem weiteren Fertigungsschritt mit angeordneter Klemmmutter,
- Fig. 5: eine fertig montierte Ausgangswelle.

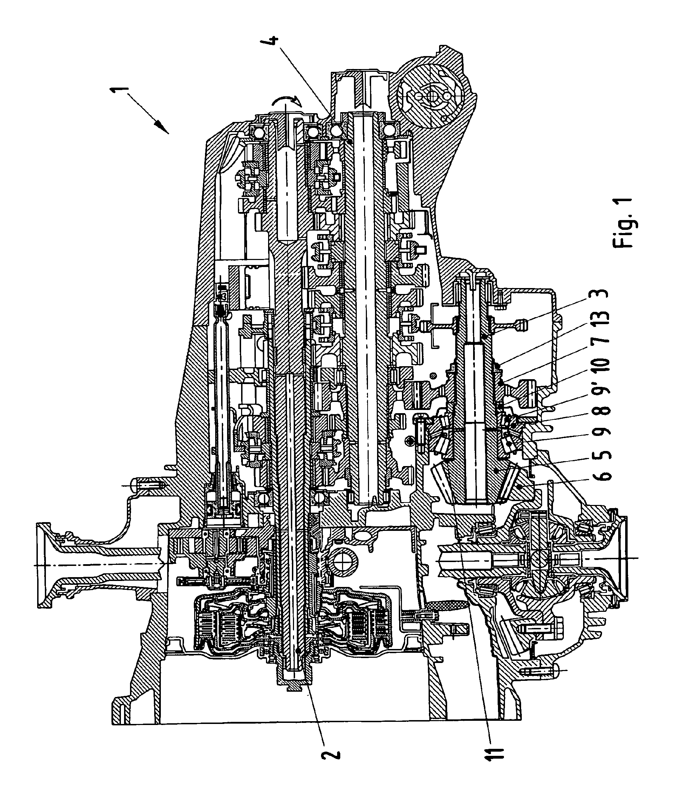

Entsprechend Fig. 1 weist ein erfindungsgemäßes Getriebe 1 eine Eingangswelle 2, eine Ausgangswelle 3 sowie eine parallel zu diesen beiden Wellen 2 und 3 angeordnete Vorgelegewelle bzw. dritte Welle 4 auf. Das Getriebe 1 ist dabei vorzugsweise als sog. Doppelkupplungsgetriebe ausgebildet, welches üblicherweise aus zwei automatisierten Teilgetrieben mit jeweils einer Kupplung besteht. Eines der beiden Teilgetriebe trägt dabei die geraden Gänge, während das andere die ungeraden Gänge trägt, wobei ein Rückwärtsgang, je nach Getriebekonzept, dem geraden oder ungeraden Teilgetriebe zugeordnet werden kann. Beide Teilgetriebe arbeiten jedoch auf einem gemeinsamen Getriebeausgang, hier die Ausgangswelle 3, hin.

Die Ausgangswelle 3 trägt längsendseitig bzw. stirnendseitig ein Ritzel 5, mit welchem ein getriebeausgangsseitiges Drehmoment auf eine für den Antrieb vorgesehene Achse, hier unter Zwischenschaltung eines Differenzials, übertragen wird. Das Ritzel 5 ist dabei der kleinere Teil eines Kegelradgetriebes und kämmt mit einem Tellerrad 6, welches den größeren Teil dieses Kegelradgetriebes darstellt. Die Achse des Tellerrades 6 ist dabei orthogonal zur Achse des Ritzels 5 angeordnet.

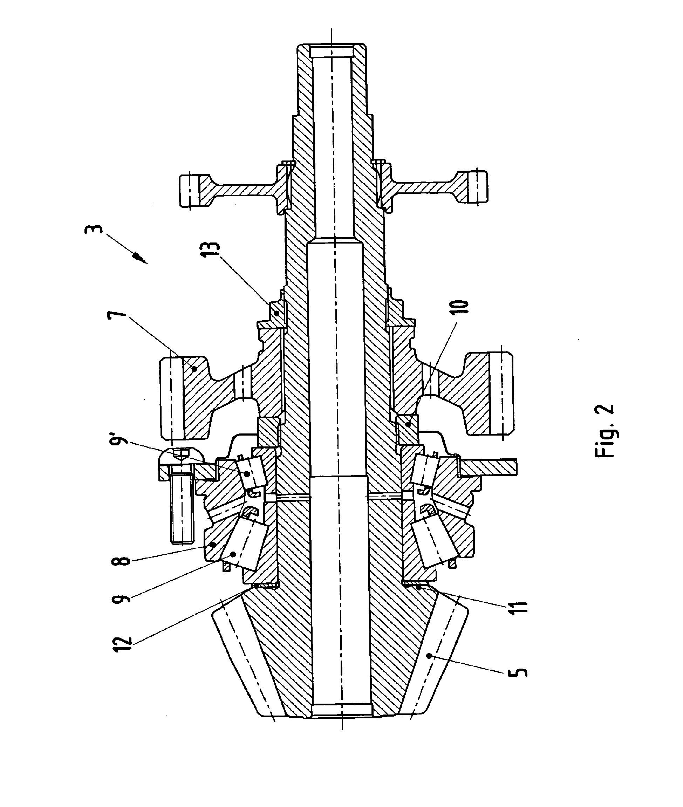

Wie den Fig. 1 und 2 weiter zu entnehmen ist, weist die Ausgangswelle 3 ein Zahnrad 7 auf, über welches die Ausgangswelle 3 mit der dritten Welle 4 antriebsverbindbar ist. Zwischen dem Zahnrad 7 und dem stirnendseitig der Ausgangswelle 3 angeordneten Ritzel 5 ist ein Lager 8 zur Lagerung der Ausgangswelle 3 bezüglich eines Getriebegehäuses angeordnet. Das Lager 8 ist in dem gezeichneten Fall als sog. Kegelrollenlager, insbesondere sogar als zweireihiges Kegelrollenlager ausgebildet und weist daher zwei gegeneinander geneigte Kegelrollenringe 9 und 9' auf. Erfindungsgemäß ist nun das Lager 8 über eine Zwischenmutter 10 gegen das Ritzel 5 der Ausgangswelle 3, insbesondere gegen einen Kragen 11 des Ritzels 5 verspannt. Zwischen dem Lager 8 und dem Kragen 11 des Ritzels 5 kann dabei ein Abstandselement 12, beispielsweise eine Abstandsscheibe angeordnet sein. Das Zahnrad 7 wird gemäß der Darstellung in Fig. 2 über eine Klemmmutter 13 in Axialrichtung gegen die Zwischenmutter 10 verspannt, wobei ein Anzugsdrehmoment der Klemmmutter 13 deutlich höher ist als das Anzugsdrehmoment der Zwischenmutter 10. Durch die Zwischenmutter 10 kann somit erreicht werden, dass das hohe Anzugsdrehmoment der Klemmmutter 13 lediglich eine hohe Verspannung des Zahnrades 7 in axialer Richtung zwischen der Klemmmutter 13 und der Zwischenmutter 10 bewirkt, während auf das Lager 8 lediglich das geringere, von der Zwischenmutter 10 ausgeübte Drehmoment einwirkt, wodurch die Reibung am Lager 8 verringert und dadurch der Wirkungsgrad des Getriebes 1 erhöht werden kann. Die Zwischenmutter 10 wirkt somit klemmkraftreduzierend auf das Lager 8.

An ihrem, dem Ritzel 5 entgegengesetzten Ende, ist die Ausgangswelle 3 ebenfalls bezüglich des Gehäuses des Getriebes 1 gelagert, und zwar vorzugsweise über ein sog. Wälzlager, welches ebenfalls für eine äußerst leichtgängige Lagerung und dadurch für einen hohen Wirkungsgrad des Getriebes 1 steht.

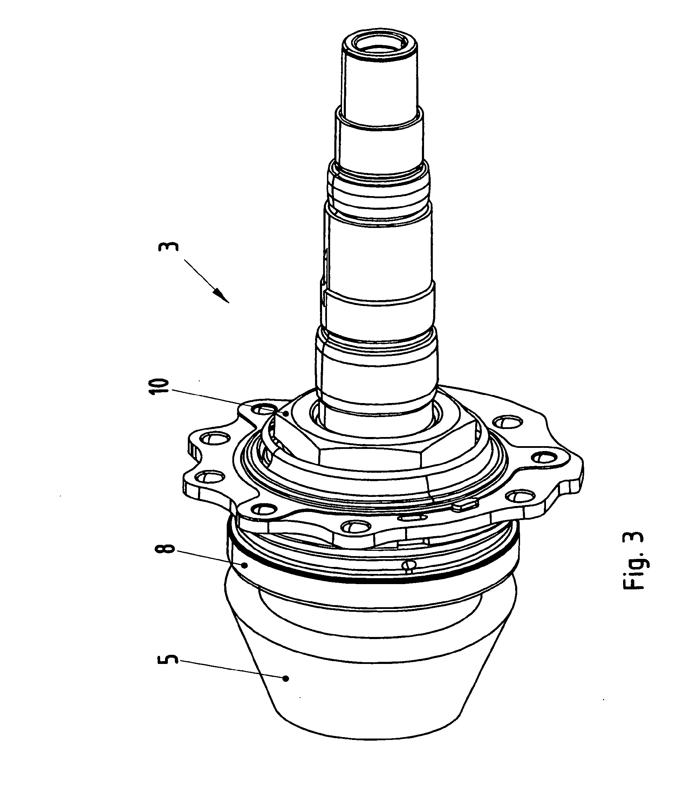

Gemäß den Fig. 3 bis 5 soll im Weiteren die Montage der einzelnen Komponenten auf der Ausgangswelle 3 kurz erläutert werden:

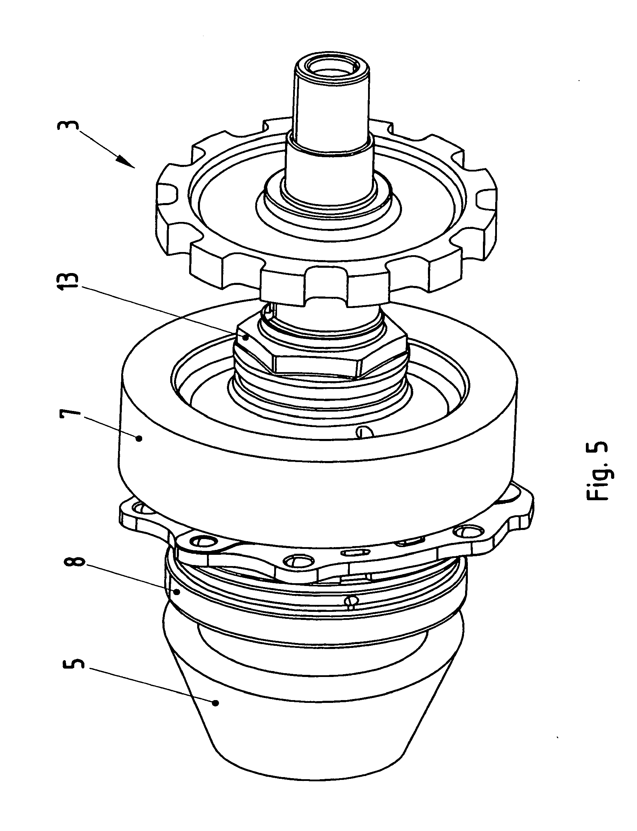

Wie der Fig. 3 zu entnehmen ist, ist auf der Ausgangswelle 3 bereits das Ritzel 5 angeordnet, welches selbstverständlich auch einteilig mit der Ausgangswelle 3 ausgebildet sein kann, und anschließend hierzu das Lager 8, welches die Ausgangswelle 3 gegenüber dem Gehäuse des Getriebes 1 lagert. Das Lager 8 ist dabei über die Zwischenmutter 10 in axialer Richtung gegenüber dem Ritzel 5 verspannt, wobei die Zwischenmutter 10 im Vergleich zur erst in Fig. 5 dargestellten Klemmmutter 13 mit einem lediglich geringen Anzugsdrehmoment festgezogen wird.

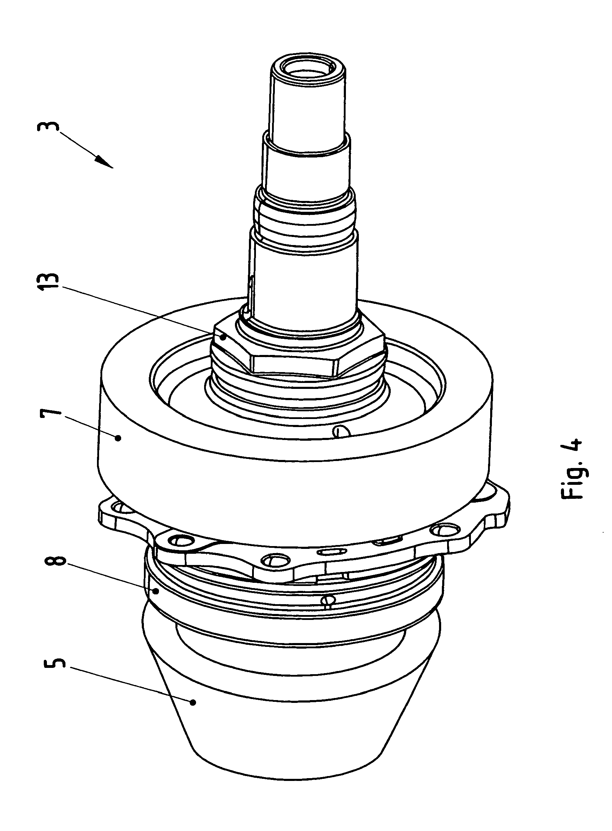

Gemäß Fig. 4 ist nun auch das Zahnrad 7 auf der Ausgangswelle 3 angeordnet und kann mit der ebenfalls bereits dargestellten Klemmmutter 13 gegenüber der nicht mehr erkennbaren Zwischenmutter 10 verspannt werden. Die Klemmmutter 13 wird dabei mit einem relativ hohen Anzugsdrehmoment beaufschlagt, wodurch sich eine hohe axiale Spannung zwischen der Zwischenmutter 10 einerseits und der Klemmmutter 13 andererseits ergibt. Durch die Zwischenmutter 10 ist jedoch gewährleistet, dass das hohe, von der Klemmmutter 13 ausgeübte Anzugsdrehmoment nicht auf das Lager 8 übertragen wird, sondern lediglich das von der Zwischenmutter 10 selbst ausgeübte und im Vergleich zur Klemmmutter 13 geringere Anzugsdrehmoment.

Durch das erfindungsgemäße Getriebe 1 ist es somit möglich, durch Vorsehen einer Zwischenmutter 10 ein hohes, von der Klemmmutter 13 ausgeübte Anzugsdrehmoment abzumildern, sodass das Lager 8 lediglich mit einem geringeren Anzugsdrehmoment und damit mit einer geringeren Kraft gegenüber dem Ritzel 5 verspannt wird. Durch die geringere Verspannung wird die Reibung am Lager 8 reduziert, wodurch das Getriebe insgesamt leichtgängiger ist und sich dadurch dessen Wirkungsgrad erhöht.

Die vorliegende Erfindung betrifft ein Getriebe mit zumindest einer Eingangswelle, einer Ausgangswelle und einer parallel zu diesen beiden Wellen angeordneten Vorgelegewelle. Erfindungswesentlich ist dabei, dass die Ausgangswelle ein stirnendseitiges Ritzel zur Drehmomentenübertragung auf eine für den Antrieb vorgesehene Achse sowie ein mit der dritten Welle wirkungsverbundenes Zahnrad aufweist und über ein zwischen dem Ritzel und dem Zahnrad vorgesehenes Lager gelagert ist, wobei zwischen dem Lager und dem Zahnrad eine Zwischenmutter vorgesehen ist, welche das Lager gegen das Ritzel verspannt, während über eine Klemmmutter das Zahnrad gegen die Zwischenmutter verspannt ist.

## Patentansprüche

1. Getriebe (1) mit zumindest einer Eingangswelle (2), einer Ausgangswelle (3) und einer parallel zu diesen beiden Wellen (2,3) angeordneten dritten Welle (4), wobei die Ausgangswelle (3) ein stirnendseitiges Ritzel (5) zur Drehmomentenübertragung auf eine für den Antrieb vorgesehene Achse sowie ein mit der dritten Welle (4) wirkungsverbundenes Zahnrad (7) aufweist und über ein zwischen dem Ritzel (5) und dem Zahnrad (7) vorgesehenes Lager (8) gelagert ist, wobei
zwischen dem Lager (8) und dem Zahnrad (7) eine an der Ausgangswelle (3) angeordnete Zwischenmutter (10) vorgesehen ist, mit der das Lager (8) gegen das Ritzel (5) verspannt ist, **dadurch gekennzeichnet, dass** das Zahnrad (7) über eine an der Ausgangswelle (3) angeordnete und sich axial am Zahnrad anschließende Klemmmutter (13) gegen die Zwischenmutter (10) verspannt ist.

2. Getriebe nach Anspruch 1, **dadurch gekennzeichnet, dass** das Lager (8) als Kegelrollenlager ausgebildet ist.

3. Getriebe nach Anspruch 2, **dadurch gekennzeichnet, dass** das Kegelrollenlager zweireihig ausgebildet ist.

4. Getriebe nach einem der Ansprüche 1 bis 3, **dadurch gekennzeichnet, dass** die Klemmmutter (13) mit einem höheren Anzugsdrehmoment aufgebracht ist als die Zwischenmutter (10).

5. Getriebe nach einem der Ansprüche 1 bis 4, **dadurch gekennzeichnet, dass** das Getriebe (1) als Doppelkupplungsgetriebe ausgebildet ist.

6. Getriebe nach einem der Ansprüche 1 bis 5, **dadurch gekennzeichnet, dass** das Ritzel (5) mit einem Tellerrad (6) eines Differentials kämmt.

7. Getriebe nach einem der Ansprüche 1 bis 6, **dadurch gekennzeichnet, dass** die Ausgangswelle (3) an ihrem, dem Ritzel (5) abgewandten Ende über ein Wälzlager gegenüber einem Gehäuse des Getriebes (1) gelagert ist.

8. Kraftfahrzeug mit einem Getriebe (1) nach einem der Ansprüche 1 bis 7.

## Claims

1. Transmission (1) having at least one input shaft (2), an output shaft (3) and a third shaft (4) which is arranged parallel to the said two shafts (2, 3), the output shaft (3) having an end-side pinion (5), for the transmission of torque to an axle which is provided for drive, and a gearwheel (7) which is operatively connected to the third shaft (4), and being mounted via a bearing (8) which is provided between the pinion (5) and the gearwheel (7), an intermediate nut (10) which is arranged on the output shaft (3) being provided between the bearing (8) and the gearwheel (7), by way of which intermediate nut (10) the bearing (8) is stressed against the pinion (5), **characterized in that** the gearwheel (7) is stressed against the intermediate nut (10) via a clamping nut (13) which is arranged on the output shaft (3) and is axially adjacent to the gearwheel.

2. Transmission according to Claim 1, **characterized in that** the bearing (8) is configured as a tapered roller bearing.

3. Transmission according to Claim 2, **characterized in that** the tapered roller bearing is of double-row configuration.

4. Transmission according to one of Claims 1 to 3, **characterized in that** the clamping nut (13) is applied with a greater tightening torque than the intermediate nut (10).

5. Transmission according to one of Claims 1 to 4, **characterized in that** the transmission (1) is configured as a dual-clutch transmission.

6. Transmission according to one of Claims 1 to 5, **characterized in that** the pinion (5) meshes with a ring gear (6) of a differential.

7. Transmission according to one of Claims 1 to 6, **characterized in that**, at its end which faces away from the pinion (5), the output shaft (3) is mounted with respect to a housing of the transmission (1) via an anti-friction bearing.

8. Motor vehicle having a transmission (1) according to one of Claims 1 to 7.

## Revendications

1. Boîte de vitesses (1) comprenant au moins un arbre d'entrée (2), un arbre de sortie (3) et un troisième arbre (4) disposé parallèlement à ces deux arbres (2, 3), l'arbre de sortie (3) comprenant un pignon (5) situé du côté de l'extrémité frontale pour la transmission de couple à un essieu prévu pour l'entraînement ainsi qu'une roue dentée (7) reliée fonctionnellement au troisième arbre (4) et étant monté au moyen d'un palier (8) prévu entre le pignon (5) et la roue dentée (7), un écrou intermédiaire (10) disposé sur l'arbre de sortie (3) étant prévu entre le palier (8) et la roue dentée (7), à l'aide duquel écrou intermédiaire le palier (8) est serré contre le pignon (5), **caractérisée en ce que** la roue dentée (7) est serrée contre l'écrou intermédiaire (10) au moyen d'un écrou de serrage (13) disposé sur l'arbre de sortie (3) et se raccordant axialement à la roue dentée.

2. Boîte de vitesses selon la revendication 1, **caractérisée en ce que** le palier (8) est réalisé sous forme de palier à rouleaux coniques.

3. Boîte de vitesses selon la revendication 2, **caractérisée en ce que** le palier à rouleaux coniques est à deux rangées.

4. Boîte de vitesses selon l'une quelconque des revendications 1 à 3, **caractérisée en ce que** l'écrou de serrage (13) est appliqué avec un couple de serrage plus élevé que celui de l'écrou intermédiaire (10).

5. Boîte de vitesses selon l'une quelconque des revendications 1 à 4, **caractérisée en ce que** la boîte de vitesses (1) est réalisée sous forme de boîte de vitesses à embrayage double.

6. Boîte de vitesses selon l'une quelconque des revendications 1 à 5, **caractérisée en ce que** le pignon (5) s'engrène avec une couronne (6) d'un différentiel.

7. Boîte de vitesses selon l'une quelconque des revendications 1 à 6, **caractérisée en ce que** l'arbre de sortie (3) est monté au moyen d'un palier à roulement par rapport à un boîtier de la boîte de vitesses (1), à son extrémité opposée au pignon (5).

8. Véhicule automobile comprenant une boîte de vitesses (1) selon l'une quelconque des revendications 1 à 7.
